# EUROPEAN PATENT APPLICATION

(11) **EP 4 770 157 A1**
(43) Date of publication of application: **01.07.2026**
(21) Application number: 24866771.9
(22) Date of filing: 27.02.2024
(51) Int. Cl.: H04W 12/088

(54) **CELL SEARCHING METHOD FOR INDUSTRIAL NETWORK, AND INDUSTRIAL TERMINAL AND INDUSTRIAL BASE STATION**

(30) Priority: 21.09.2023 CN 202311229020
(71) Applicant: Shenzhen Inovance Technology Co., Ltd., Shenzhen, Guangdong 518000 (CN)
(72) Inventor: ZHU, Zhijun, Shenzhen, Guangdong 518000 (CN); ZHOU, Xiong, Shenzhen, Guangdong 518000 (CN); RUAN, Shuisheng, Shenzhen, Guangdong 518000 (CN); LIU, Lifa, Shenzhen, Guangdong 518000 (CN); LIN, Zhinan, Shenzhen, Guangdong 518000 (CN); LI, Changgeng, Shenzhen, Guangdong 518000 (CN)
(74) Representative: Osterhoff, Utz
(86) International application number: PCT/CN2024/078643
(87) International publication number: WO 2025/060344

(57) **Abstract**

The present application discloses a cell searching method for industrial network, an industrial terminal and an industrial base station. The method includes: receiving data over radio interface corresponding to a search frequency point; parsing broadcast information in the data over radio interface to obtain cell channel information and whitelist information of a base station corresponding to the data over radio interface, where the whitelist information includes terminal information associated with the base station; and in response to that the terminal is successfully matched with the terminal information in the whitelist information, terminating cell searching and determining the cell channel information as a cell searching result.

## Description

The present application claims priority to Chinese Patent Application No. 202311229020.1, filed on September 21, 2023, the entire contents of which are incorporated herein by reference.

### TECHNICAL FIELD

The present application relates to the technical field of industrial networks, and in particular to a cell searching method for industrial network, an industrial terminal, and an industrial base station.

### BACKGROUND

In the communication technology of industrial networks, the application of wireless technologies has become increasingly in-depth, among which WIFI, 4G and 5G technologies are the most widely used. At present, wireless terminals and base stations need to achieve synchronization before conducting service interaction. After being powered on, a terminal needs to search for and obtain cell information before initiating random access. Generally, the physical layer of the terminal obtains a physical cell identifier and cell signal strength after completing the search for synchronization information, and reports the information to the radio resource controller, which selects a cell with the best signal strength for access.

### SUMMARY

However, such a method is likely to cause the industrial terminal to access an incorrect base station, resulting in functional abnormalities. In addition, the cell searching will terminate only after all frequency domain resources are searched, leading to a long cell searching time for terminals in the industrial network and affecting usage.

The main purpose of the present application is to provide a cell searching method for industrial network, an industrial terminal and an industrial base station, aiming to ensure the normal function of the industrial terminal and shorten the cell searching time at the same time.

To achieve the above purpose, the present application provides a cell searching method for industrial network, applied to a terminal, including:
receiving data over radio interface corresponding to a search frequency point;
parsing broadcast information in the data over radio interface to obtain cell channel information and whitelist information of a base station corresponding to the data over radio interface, and the whitelist information includes terminal information associated with the base station; and
in response to that the terminal is successfully matched with the terminal information in the whitelist information, terminating cell searching and determining the cell channel information as a cell searching result.

In an embodiment, the step of parsing the broadcast information in the data over radio interface to obtain the cell channel information and the whitelist information of the base station corresponding to the data over radio interface includes:
parsing main system information in the data over radio interface to obtain the cell channel information and indication and scheduling information of auxiliary system information;
determining whether the auxiliary system information exists based on the indication and scheduling information; and
in response to determining that the auxiliary system information exists, parsing the auxiliary system information in the data over radio interface based on the indication and scheduling information to obtain the whitelist information.

In an embodiment, the terminal information includes at least one of following information: a physical address, a terminal code, or a logical address.

In an embodiment, after the step of parsing the broadcast information in the data over radio interface to obtain the cell channel information and the whitelist information of the base station corresponding to the data over radio interface, the method further includes:
in response to that the terminal is not successfully matched with the terminal information in the whitelist information, configuring a new search frequency point, and returning to execute the step of receiving the data over radio interface corresponding to the search frequency point until a search range is exceeded.

In an embodiment, the step of receiving the data over radio interface corresponding to the search frequency point includes: receiving the data over radio interface corresponding to the search frequency point based on a subcarrier interval;
after the step of parsing the broadcast information in the data over radio interface to obtain the cell channel information and the whitelist information of the base station that allows the terminal to access corresponding to the data over radio interface, the method further includes:
in response to that the terminal is not successfully matched with the terminal information in the whitelist information and a new subcarrier interval exists, returning to execute the step of receiving the data over radio interface corresponding to the search frequency point based on the subcarrier interval; and in response to that the terminal is not successfully matched with the terminal information in the whitelist information and no new subcarrier interval exists, configuring a new search frequency point and returning to execute the step of receiving the data over radio interface corresponding to the search frequency point based on the subcarrier interval.

In an embodiment, after the step of parsing the broadcast information in the data over radio interface, the method further includes:
in response to that the parsing is successful, obtaining the cell channel information and the whitelist information; and
in response to that the parsing fails, configuring the new search frequency point, and returning to execute the step of receiving the data over radio interface corresponding to the search frequency point until the search range is exceeded.

In an embodiment, after the step of receiving the data over radio interface corresponding to the search frequency point, the method further includes:
detecting whether a synchronization signal of the base station exists in the data over radio interface;
in response to that the synchronization signal is detected, executing the step of parsing the broadcast information in the data over radio interface; and
in response to that the synchronization signal is not detected, configuring the new search frequency point, and returning to execute the step of receiving the data over radio interface corresponding to the search frequency point until the search range is exceeded.

In an embodiment, the step of detecting whether the synchronization signal of the base station exists in the data over radio interface includes:
detecting whether the synchronization signal of the corresponding base station exists in turn based on a base station identifier in the data over radio interface.

In addition, to achieve the above purpose, the present application also provides a cell searching method for industrial network, applied to a base station, the method including the following steps:
acquiring whitelist information, and the whitelist information includes terminal information associated with the base station; and
periodically sending broadcast information including the whitelist information, so that the terminal terminates cell searching and determines cell channel information as a cell searching result in response to that a terminal identifies that the terminal is successfully matched with the terminal information in the whitelist information during a cell searching process.

In an embodiment, the step of periodically sending the broadcast information including the whitelist information includes:
periodically sending main system information, and the main system information includes cell channel information and indication and scheduling information of auxiliary system information; and
periodically sending the auxiliary system information, and the auxiliary system information includes the whitelist information.

In an embodiment, the terminal information includes at least one of the following information: a physical address, a terminal code, or a logical address.

In addition, to achieve the above purpose, the present application also provides an industrial terminal, the industrial terminal including: a processor, and a cell searching program stored on the memory and executable on the processor, and the cell searching program, when executed by the processor, implements the steps of the cell searching method according to any one of the above.

In addition, to achieve the above purpose, the present application also provides an industrial base station, the industrial base station including: a memory, a processor, and a cell searching program stored on the memory and executable on the processor, and the cell searching program, when executed by the processor, implements the steps of the cell searching method according to any one of the above.

The application provides a cell searching method for industrial network. After the terminal receives data over radio interface corresponding to the search frequency point, the method parses broadcast information in the data over radio interface to obtain cell channel information and whitelist information of the base station. When the terminal is successfully matched with the terminal information in the whitelist information, the cell searching is terminated and the cell channel information is determined as the cell searching result. Based on this, the cell searching does not need to end until all frequency domain resources are searched, so the cell searching duration can be effectively shortened. At the same time, the terminal is ensured to be associated with the base station it accesses, so as to improve the accuracy of the base station accessed by the terminal, ensure that the base station can provide accurate and effective network services for the terminal, and ensure the realization of the normal functions of the terminal. Thus, the normal function of the industrial terminal is ensured and the cell searching time is shortened at the same time.

### BRIEF DESCRIPTION OF THE DRAWINGS

FIG. 1 is a schematic diagram of the hardware structure of an industrial terminal and an industrial base station involved in the operation of an embodiment of a cell searching method for industrial network of the present application.
FIG. 2 is a schematic flow diagram of a cell searching method applied to a terminal according to an embodiment of the present application.
FIG. 3 is a schematic flow diagram of the cell searching method applied to the terminal according to another embodiment of the present application.
FIG. 4 is a schematic content diagram of main system information and auxiliary system information of the cell searching method applied to the terminal according to an embodiment of the present application.
FIG. 5 is a schematic flow diagram of the cell searching method applied to the terminal according to yet another embodiment of the present application.
FIG. 6 is a schematic flow diagram of the cell searching method applied to a base station according to an embodiment of the present application.
FIG. 7 is a schematic diagram of periodically sending main system information and auxiliary system information of the cell searching method applied to the base station according to an embodiment of the present application.

The realization of the objective, functional characteristics, and advantages of the present application are further described with reference to the accompanying drawings.

### DETAILED DESCRIPTION OF THE EMBODIMENTS

It should be understood that the specific embodiments described herein are only used to explain the present application and are not intended to limit the present application.

An embodiment of the present application provides an industrial terminal 1, such as an industrial personal computer and the like.

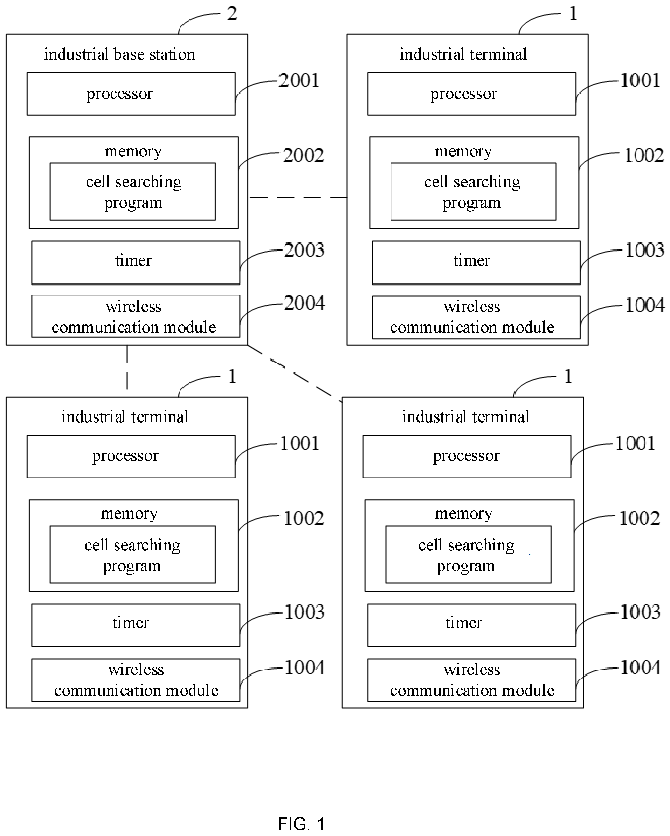

In the embodiment of the present application, referring to FIG. 1, the industrial terminal 1 includes: a processor 1001 (e.g., a CPU), a memory 1002, a timer 1003 and a wireless communication module 1004, where these components are communicatively connected through a communication bus. The memory 1002 may be a high-speed RAM memory, or a non-volatile memory (e.g., a magnetic disk memory). Optionally, the memory 1002 may also be a storage device independent of the processor 1001.

The wireless communication module 1004 is used for wireless communication connection with external devices. The wireless communication module 1004 includes a 5G communication module, a WIFI module and the like.

Those skilled in the art can understand that the device structure shown in FIG. 1 does not constitute a limitation on the device, and may include more or fewer components than those shown, or a combination of some components, or differently arranged components.

As shown in FIG. 1, the memory 1002, as a computer storage medium, may include a cell searching program.

In the device shown in FIG. 1, the processor 1001 may be used to call the cell searching program stored in the memory 1002 and execute the relevant step operations of the cell searching method in the following embodiments.

An embodiment of the present application also provides a cell searching method for industrial network applied to the industrial terminal.

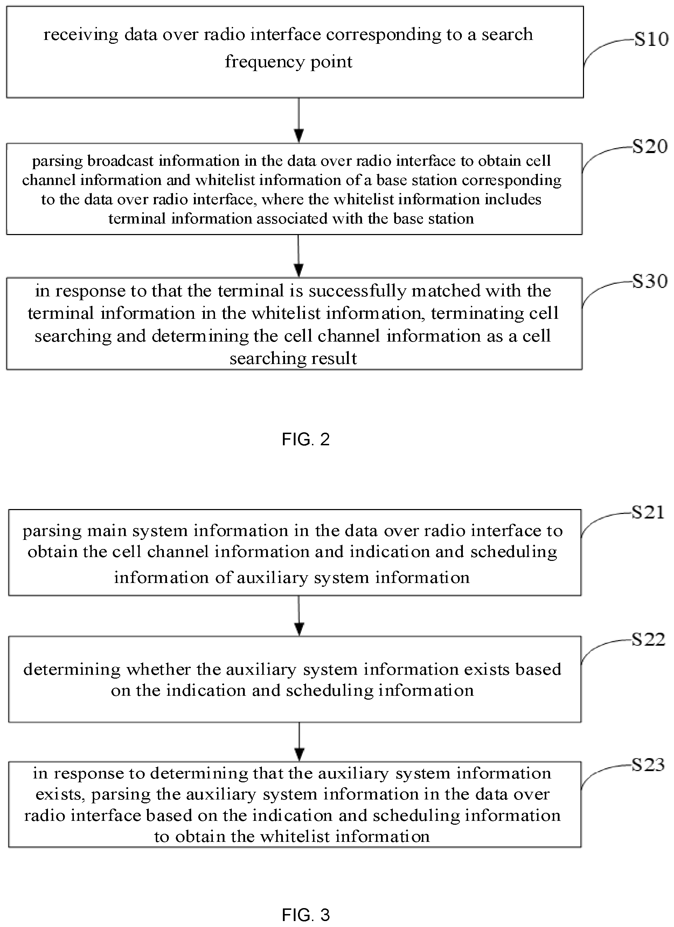

Referring to FIG. 2, an embodiment of a cell searching method for industrial network applied to the industrial terminal is provided. In this embodiment, the cell searching method includes:
Step S10: receiving data over radio interface corresponding to a search frequency point;
The search frequency point herein may be a preset fixed frequency point, or a frequency point obtained by adjusting a preset fixed frequency point.

The data over radio interface is received by the industrial terminal based on the wireless transmission specification between the industrial terminal and the base station.

The industrial terminal may configure a search frequency point according to pre-stored system frequency sweep information. The data over radio interface is received based on the search frequency point.

It should be noted that the received data over radio interface may be of one industrial base station or data of multiple industrial base stations. Specifically, the data over radio interface is all data received by the industrial terminal from a wireless link based on the search frequency point.

Step S20: parsing broadcast information in the data over radio interface to obtain cell channel information and whitelist information of a base station corresponding to the data over radio interface, where the whitelist information includes terminal information associated with the base station;
An industrial base station may acquire corresponding whitelist information stored in itself or from an external device, where the whitelist information includes terminal information of all industrial terminals associated with the industrial base station. The industrial base station is used to provide wireless network services for its associated industrial terminals to realize the normal functions of the industrial terminals. Different industrial base stations correspond to different whitelist information. The industrial base station may periodically send broadcast information including the whitelist information through a wireless link.

The received data over radio interface is demodulated according to a preset rule, and the cell channel information and the whitelist information can be obtained when the demodulation is successful.

The cell channel information is relevant information for realizing network synchronization between the industrial base station and the industrial terminal. The cell channel information includes, but is not limited to: a system frame number, a system bandwidth, a number of antenna ports, a cell identifier, a carrier number, a radio frame length, a time slot structure, a CIF indication, a DRS power, an expected received USS power, an adjustment step size and the like.

Step S30: in response to that the terminal is successfully matched with the terminal information in the whitelist information, terminating cell searching and determining the cell channel information as a cell searching result.

When the whitelist information contains the terminal information of the industrial terminal, it can be considered that the terminal is successfully matched with the terminal information in the whitelist information, and the cell searching can be terminated. Terminating the cell searching here means no longer acquiring data over radio interface based on other search frequency points to parse the cell channel information. After the cell searching is terminated, the currently parsed cell channel information is reported as a cell searching result, and the industrial terminal can access its associated industrial base station at any time based on the cell channel information in the cell searching result subsequently.

The cell searching method provided in the embodiment of the present application parses the broadcast information in the data over radio interface to obtain the cell channel information and the whitelist information of the base station after the terminal receives the data over radio interface corresponding to the search frequency point. When the terminal is successfully matched with the terminal information in the whitelist information, the cell searching is terminated and the cell channel information is determined as the cell searching result. Based on this, the cell searching does not need to end until all frequency domain resources are searched, so the cell searching duration can be effectively shortened. At the same time, the terminal is ensured to be associated with the base station it accesses, so as to improve the accuracy of the base station accessed by the terminal, ensure that the base station can provide accurate and effective network services for the terminal, and ensure the realization of the normal functions of the terminal. Thus, the normal function of the industrial terminal is ensured and the cell searching time is shortened at the same time.

In the above embodiment, the terminal information includes at least one of the following information: a physical address, a terminal code, or a logical address.

In an embodiment, if the whitelist information parsed from the data over radio interface includes the physical address of the current industrial terminal, the cell searching is terminated.

In another embodiment, if the whitelist information parsed from the data over radio interface includes the logical address of the current industrial terminal, the cell searching is terminated.

In yet another embodiment, if the whitelist information parsed from the data over radio interface includes the physical address of the current industrial terminal, the cell searching is terminated.

In this embodiment, the physical address, the terminal code and the logical address can all be used as the unique identifier of the industrial terminal. Constructing a whitelist through the above information is conducive to ensuring the accuracy of matching between the industrial base station and the industrial terminal, thereby further ensuring the normal function of the industrial terminal and shortening the cell searching time at the same time.

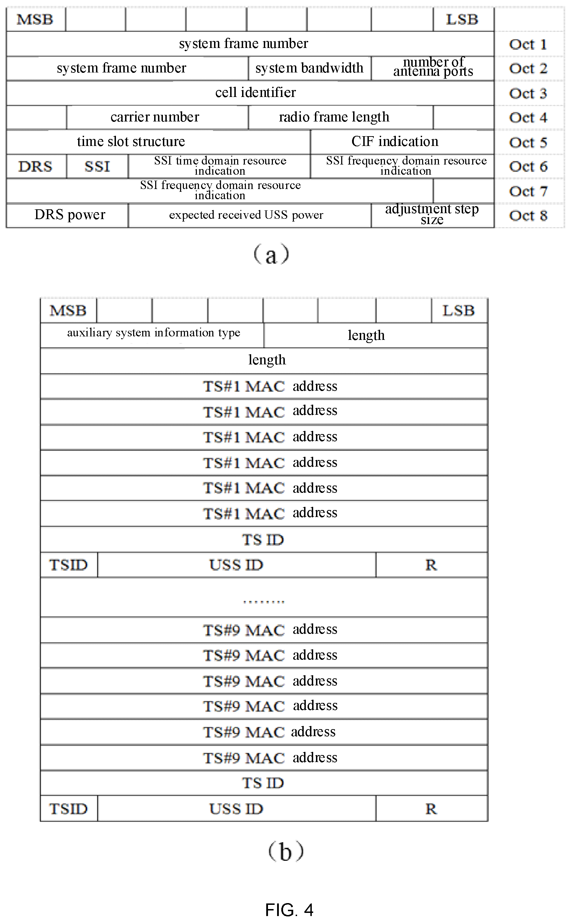

Based on the above embodiment, another embodiment of the cell searching method for industrial network applied to the industrial terminal is provided. In this embodiment, referring to FIG. 3, the step S20 includes:
Step S21: parsing main system information in the data over radio interface to obtain the cell channel information and indication and scheduling information of auxiliary system information;
The main system information as shown in (a) of FIG. 4 includes the cell channel information and the indication and scheduling information of the auxiliary system information. The indication and scheduling information includes first indication information, second indication information and third indication information. The first indication information is used to indicate whether the auxiliary system information exists, the second indication information is used to indicate the time domain resource of the auxiliary system information in the data over radio interface, and the third indication information is used to indicate the frequency domain resource of the auxiliary system information in the data over radio interface.

Step S22: determining whether the auxiliary system information exists based on the indication and scheduling information;
Whether the auxiliary system information exists is determined based on the first indication information as shown in (b) of FIG. 4.

Step S23: in response to determining that the auxiliary system information exists, parsing the auxiliary system information in the data over radio interface based on the indication and scheduling information to obtain the whitelist information.

In response to determining that the auxiliary system information exists, the auxiliary system information in the data over radio interface is parsed based on the second indication information and the third indication information to obtain the whitelist information herein.

In this embodiment, the preset terminal information in the whitelist information is a preset physical address, and each preset physical address has a length of 6 bytes.

In this embodiment, in the process of periodically sending the broadcast information, the industrial base station sends the main system information first, and then sends the auxiliary system information.

In this embodiment, the indication information of the auxiliary system information is set in the main system information. Based on this, the industrial terminal can accurately know whether the whitelist information exists and the location of the whitelist information resource through the indication information, and further parse the auxiliary system information only when it is determined that the auxiliary system information exists. This is conducive to reducing unnecessary information parsing operations in the cell searching process, parsing the whitelist information accurately and quickly, thereby improving the efficiency of the cell searching process and further shortening the time for obtaining the cell searching result.

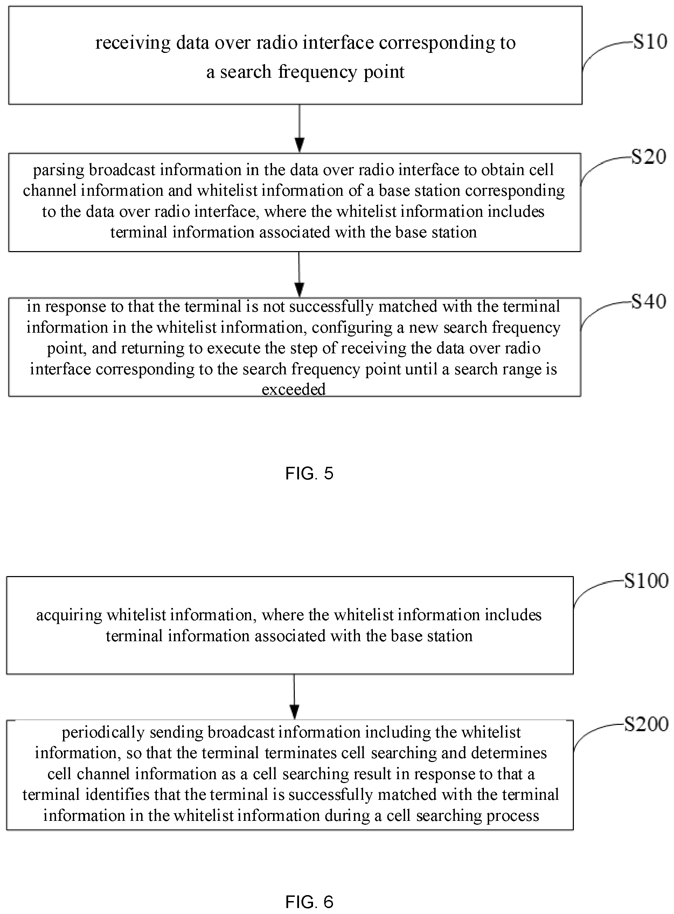

Based on any of the above embodiments, yet another embodiment of the cell searching method for the industrial network applied to the industrial terminal is provided. In this embodiment, referring to FIG. 5, after the step S20, the method further includes:
Step S40: in response to that the terminal is not successfully matched with the terminal information in the whitelist information, configuring a new search frequency point, and returning to execute the step of receiving the data over radio interface corresponding to the search frequency point until a search range is exceeded.

The search range may include a plurality of preset frequency points, and the preset frequency points in the plurality of preset frequency points that have not undergone cell searching are taken as new search frequency points. If all frequencies in the plurality of preset frequency points are used as search frequency points, the cell searching is terminated.

The search range may also include a preset number of frequency points that meet a preset relationship. The total number of search frequency points for cell searching is less than the preset number, and other frequency points that meet the preset relationship with the current search frequency point are determined as new search frequency points; otherwise, the cell searching is terminated.

After configuring a new search frequency point, data over radio interface can be acquired based on the new search frequency point, and the cell searching is performed again based on the steps in the above embodiments.

In this embodiment, when the whitelist information does not include the terminal information of the industrial terminal, it can be considered that the corresponding base station cannot provide the services required for the realization of the normal functions of the industrial terminal. At this time, a new search frequency point is reconfigured for cell searching, thereby ensuring that the industrial terminal can successfully access its associated industrial base station and the realization of normal functions.

In this embodiment, the step of receiving the data over radio interface corresponding to the search frequency point includes: receiving the data over radio interface corresponding to the search frequency point based on a subcarrier interval. After the step of parsing the broadcast information in the data over radio interface to obtain the cell channel information and the whitelist information of the base station that allows terminal access corresponding to the data over radio interface, the method further includes: in response to that the terminal is not successfully matched with the terminal information in the whitelist information and a new subcarrier interval exists, returning to execute the step of receiving the data over radio interface corresponding to the search frequency point based on the subcarrier interval; and in response to that the terminal is not successfully matched with the terminal information in the whitelist information and no new subcarrier interval exists, configuring a new search frequency point and returning to execute the step of receiving the data over radio interface corresponding to the search frequency point based on the subcarrier interval.

The subcarrier interval may be a preset fixed parameter, or a parameter obtained by adjusting a preset subcarrier interval. The subcarrier interval may be 15, 30, 60 and the like.

One search frequency point corresponds to a plurality of subcarrier intervals. If there is an unsearched subcarrier interval among the subcarrier intervals corresponding to the current search frequency point, it can be used as a new subcarrier interval to sample the data over radio interface, and the cell searching is performed based on the scheme mentioned in the above embodiments. If all subcarrier intervals corresponding to the current search frequency point have undergone cell searching, a new search frequency point can be configured, and then the data over radio interface corresponding to the corresponding frequency point is received based on the subcarrier interval.

In this embodiment, performing cell searching on the search frequency point based on the subcarrier interval is conducive to improving the accuracy of the cell searching, thereby ensuring the accuracy of the industrial terminal accessing the industrial base station, and further ensuring the realization of the normal functions of the industrial base station.

Based on any of the above embodiments, in this embodiment, after the step of parsing the broadcast information in the data over radio interface, the method further includes: in response to that the parsing is successful, obtaining the cell channel information and the whitelist information; and in response to that the parsing fails, configuring the new search frequency point, and returning to execute the step of receiving the data over radio interface corresponding to the search frequency point until the search range is exceeded.

Here, if the cell channel information and/or the whitelist information cannot be parsed from the data over radio interface, it can be considered that the base station corresponding to the data over radio interface is not a base station that can provide services for the industrial terminal. At this time, no further processing is performed on the current data over radio interface, but a new search frequency point is reconfigured to receive new data over radio interface for cell searching, thereby ensuring that the industrial terminal can access its associated base station smoothly and accurately.

Based on any of the above embodiments, in this embodiment, after the step of receiving the data over radio interface corresponding to the search frequency point, the method further includes: detecting whether a synchronization signal of the base station exists in the data over radio interface; in response to that the synchronization signal is detected, executing the step of parsing the broadcast information in the data over radio interface; and in response to that the synchronization signal is not detected, configuring the new search frequency point, and returning to execute the step of receiving the data over radio interface corresponding to the search frequency point until the search range is exceeded.

The synchronization signal is a reference signal for adjusting the network configuration parameters of the industrial base station when the industrial terminal and the industrial base station establish network synchronization for the industrial base station to access the industrial terminal.

If the synchronization signal of the base station exists in the data over radio interface, it indicates that the corresponding industrial base station allows the terminal to access; and if the synchronization signal of the base station does not exist in the data over radio interface, it indicates that the corresponding base station does not allow the terminal to access. At this time, a new search frequency point is reconfigured for cell searching without further processing the data over radio interface, which is conducive to improving the efficiency of the cell searching and further ensuring the realization of the normal functions of the industrial terminal.

In this embodiment, the step of detecting whether the synchronization signal of the base station exists in the data over radio interface includes: detecting whether the synchronization signal of the corresponding base station exists in turn based on a base station identifier in the data over radio interface.

In an embodiment, the base station identifier (BS ID) in the data over radio interface can be identified, and the number of identified base station identifiers may be one or more than one. The identification rule of the synchronization signal of the corresponding base station is determined based on the base station identifier, and whether the corresponding synchronization signal exists in the data over radio interface is identified based on the identification rule. If the number of identified base station identifiers is more than one, all base station identifiers can be traversed, and the synchronization signal in the data over radio interface is detected in turn based on each base station identifier.

In this embodiment, detecting the synchronization signal through the base station identifier in the data over radio interface is conducive to improving the comprehensiveness of the synchronization signal detection and the accuracy of the cell searching, ensuring the accurate access between the industrial terminal and its associated industrial base station, and further ensuring the realization of the normal functions of the industrial terminal.

To better understand the cell searching process of the industrial terminal in the embodiment of the present application, the entire cell searching process of the industrial terminal is described below with a specific example:
Step 1: configuring, by the industrial terminal, a radio frequency point based on system frequency sweep information and starting searching by traversing the frequency points; and if the frequency point traversal is completed, terminating the cell searching and reporting the network search result; otherwise, proceeding to the next step.

Step 2: starting the cell searching and matching of the frequency point by traversing subcarriers; and if the subcarrier traversal is completed, returning to Step 1; otherwise, proceeding to the next step.

Step 3: collecting data transmitted through the air interface.

Step 4: starting synchronization signal detection by traversing base station identifiers; and if the base station identifier traversal is completed, returning to Step 2; otherwise, proceeding to the next step.

Step 5: determining whether the synchronization is successful; and if the synchronization is successful, proceeding to the next step; otherwise, returning to Step 4.

Step 6: detecting main system information and auxiliary system information to obtain cell channel information and whitelist information.

Step 7: if the whitelist matching fails, returning to Step 4; and if the whitelist matching is successful, reporting the network search result (including the cell channel information) and terminating the cell searching.

An embodiment of the present application provides an industrial base station 2.

In the embodiment of the present application, referring to FIG. 1, the industrial base station 2 includes: a processor 2001 (e.g., a CPU), a memory 2002, a timer 2003 and a wireless communication module 2004, where these components are communicatively connected through a communication bus. The memory 2002 may be a high-speed RAM memory, or a non-volatile memory (e.g., a magnetic disk memory). Optionally, the memory 2002 may also be a storage device independent of the processor 2001.

The wireless communication module 2004 is used for wireless communication connection with external devices. The wireless communication module 2004 includes a 5G communication module, a WIFI module and the like.

Those skilled in the art can understand that the device structure shown in FIG. 1 does not constitute a limitation on the device, and may include more or fewer components than those shown, or combine some components, or arrange different components.

As shown in FIG. 1, the memory 2002, as a computer storage medium, may include a cell searching program.

In the device shown in FIG. 1, the processor 2001 may be used to call the cell searching program stored in the memory 2002 and execute the relevant step operations of the cell searching method in the following embodiments.

An embodiment of the present application also provides a cell searching method for industrial network applied to the above industrial base station.

Referring to FIG. 6, an embodiment of a cell searching method for industrial network applied to the above industrial base station is provided. In this embodiment, the cell searching method includes:
Step S100: acquiring whitelist information, where the whitelist information includes terminal information associated with the base station;
The industrial base station may acquire corresponding whitelist information stored in itself or from an external device, where the whitelist information includes preset terminal information of all industrial terminals associated with the industrial base station. Here, the industrial base station is used to provide wireless network services for its associated industrial terminals to realize the normal functions of the industrial terminals. Different industrial base stations correspond to different whitelist information.

The received data over radio interface is demodulated based on a preset rule, and the cell channel information and the whitelist information can be obtained when the demodulation is successful.

Step S200: periodically sending broadcast information including the whitelist information, so that the terminal terminates cell searching and determines cell channel information as a cell searching result in response to that a terminal identifies that the terminal is successfully matched with the terminal information in the whitelist information during a cell searching process.

The industrial base station may periodically send broadcast information including the whitelist information through a wireless link.

The broadcast information may be generated based on the whitelist information and the cell channel information.

The cell channel information is relevant information for realizing network synchronization between the industrial base station and the industrial terminal. The cell channel information includes, but is not limited to: a system frame number, a system bandwidth, a number of antenna ports, a cell identifier, a carrier number, a radio frame length, a time slot structure, a CIF indication, a DRS power, an expected received USS power, an adjustment step size and the like.

In this embodiment, through the above manner, the base station can send the whitelist information for the industrial terminal to determine whether it is associated when the industrial terminal performs cell searching, so that the industrial terminal can terminate the cell searching when determining that it is associated with the industrial base station without searching all cells, effectively reducing the cell searching time. Only the industrial terminal associated with the industrial base station is allowed to access the base station, so as to ensure that the base station can provide the services required for the realization of the normal functions of the accessed terminal, further reducing the cell searching time of the industrial terminal and ensuring the realization of the normal functions of the industrial terminal at the same time.

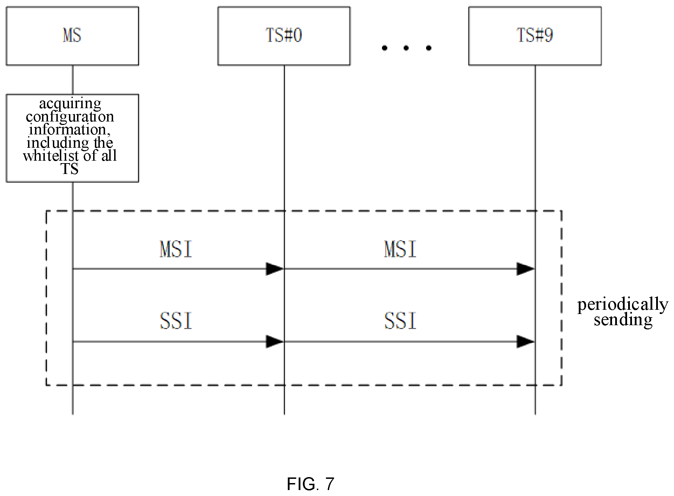

With reference to FIG. 7, step S200 includes: periodically sending main system information, where the main system information includes cell channel information and indication and scheduling information of auxiliary system information; and periodically sending the auxiliary system information, where the auxiliary system information includes the whitelist information.

The main system information (MSI, the content is shown in (a) of FIG. 4) includes the cell channel information and the indication and scheduling information of the auxiliary system information. The indication and scheduling information includes first indication information, second indication information and third indication information. The first indication information is used to indicate whether the auxiliary system information exists, the second indication information is used to indicate the time domain resource of the auxiliary system information in the data over radio interface, and the third indication information is used to indicate the frequency domain resource of the auxiliary system information in the data over radio interface.

The auxiliary system information (SSI, the content is shown in (b) of FIG. 4) includes the whitelist information. In this embodiment, the terminal information in the whitelist information is a physical address, and each physical address has a length of 6 bytes.

In this embodiment, in the process of periodically sending the broadcast information, the main system information is sent first and then the auxiliary system information is sent in each period.

In this embodiment, the broadcast information is sent in the form of main system information and auxiliary system information, and the indication information of the auxiliary system information is set in the main system information. Based on this, the industrial terminal can accurately know whether the whitelist information exists and the location of the whitelist information resource through the indication information, and further parse the auxiliary system information only when it is determined that the auxiliary system information exists. This is conducive to reducing unnecessary information parsing operations in the cell searching process, parsing the whitelist information accurately and quickly, thereby improving the efficiency of the cell searching process and further shortening the time for obtaining the cell searching result.

The preset terminal information includes at least one of the following information: a physical address, a terminal code, or a preset logical address. In this embodiment, the physical address, the terminal code and the logical address can all be used as the unique identifier of the industrial terminal. Constructing a whitelist through the above information is conducive to ensuring the accuracy of matching between the industrial base station and the industrial terminal, thereby further ensuring the normal function of the industrial terminal and shortening the cell searching time at the same time.

In addition, an embodiment of the present application also provides a storage medium, on which a cell searching program is stored, where the cell searching program, when executed by a processor, implements the relevant steps of any embodiment of the cell searching method as described above.

It should be noted that in this document, the terms "include", "comprise" or any other variants thereof are intended to cover non-exclusive inclusion, so that a process, method, article or system including a series of elements not only includes those elements, but also includes other elements not explicitly listed, or also includes inherent elements of such a process, method, article or system. Without more restrictions, an element limited by the sentence "including a..." does not exclude the existence of other identical elements in the process, method, article or system including the element.

The serial numbers of the embodiments of the present application are only for description and do not represent the advantages or disadvantages of the embodiments.

From the description of the above embodiments, those skilled in the art can clearly understand that the methods of the above embodiments can be implemented by means of software plus a necessary general hardware platform, and of course also by hardware, but in many cases the former is a better embodiment. Based on such understanding, the technical solution of the present application, essentially or the part that contributes to the prior art, can be embodied in the form of a software product, which is stored in a storage medium (such as ROM/RAM, magnetic disk, optical disc) as described above, and includes several instructions to make a terminal device (which may be a mobile phone, a computer, a server, an air conditioner, a network device, etc.) execute the methods described in each embodiment of the present application.

The above are only embodiments of the present application, and are not intended to limit the scope of the present application. Any equivalent structure or equivalent process transformation made through the description and accompanying drawings of the present application, or direct or indirect application in other relevant technical fields, is similarly included in the scope of the present application.

## Claims

1. A cell searching method for industrial network, applied to a terminal, **characterized by** comprising the steps of:
receiving data over radio interface corresponding to a search frequency point;
parsing broadcast information in the data over radio interface to obtain cell channel information and whitelist information of a base station corresponding to the data over radio interface, wherein the whitelist information comprises terminal information associated with the base station; and
in response to that the terminal is successfully matched with the terminal information in the whitelist information, terminating cell searching and determining the cell channel information as a cell searching result.

2. The cell searching method according to claim 1, wherein the step of parsing the broadcast information in the data over radio interface to obtain the cell channel information and the whitelist information of the base station corresponding to the data over radio interface comprises:
parsing main system information in the data over radio interface to obtain the cell channel information and indication and scheduling information of auxiliary system information;
determining whether the auxiliary system information exists based on the indication and scheduling information; and
in response to determining that the auxiliary system information exists, parsing the auxiliary system information in the data over radio interface based on the indication and scheduling information to obtain the whitelist information.

3. The cell searching method according to claim 1, wherein the terminal information comprises at least one of following information: a physical address, a terminal code, or a logical address.

4. The cell searching method according to claim 1, wherein after the step of parsing the broadcast information in the data over radio interface to obtain the cell channel information and the whitelist information of the base station corresponding to the data over radio interface, the method further comprises:
in response to that the terminal is not successfully matched with the terminal information in the whitelist information, configuring a new search frequency point, and returning to execute the step of receiving the data over radio interface corresponding to the search frequency point until a search range is exceeded.

5. The cell searching method according to claim 4, wherein the step of receiving the data over radio interface corresponding to the search frequency point comprises: receiving the data over radio interface corresponding to the search frequency point based on a subcarrier interval;
after the step of parsing the broadcast information in the data over radio interface to obtain the cell channel information and the whitelist information of the base station corresponding to the data over radio interface, the method further comprises:
in response to that the terminal is not successfully matched with the terminal information in the whitelist information and a new subcarrier interval exists, returning to execute the step of receiving the data over radio interface corresponding to the search frequency point based on the subcarrier interval; and in response to that the terminal is not successfully matched with the terminal information in the whitelist information and no new subcarrier interval exists, configuring a new search frequency point and returning to execute the step of receiving the data over radio interface corresponding to the search frequency point based on the subcarrier interval.

6. The cell searching method according to any one of claims 1 to 5, wherein after the step of parsing the broadcast information in the data over radio interface, the method further comprises:
in response to that the parsing is successful, obtaining the cell channel information and the whitelist information; and
in response to that the parsing fails, configuring the new search frequency point, and returning to execute the step of receiving the data over radio interface corresponding to the search frequency point until the search range is exceeded.

7. The cell searching method according to any one of claims 1 to 5, wherein after the step of receiving the data over radio interface corresponding to the search frequency point, the method further comprises:
detecting whether a synchronization signal of the base station exists in the data over radio interface;
in response to that the synchronization signal is detected, executing the step of parsing the broadcast information in the data over radio interface; and
in response to that the synchronization signal is not detected, configuring the new search frequency point, and returning to execute the step of receiving the data over radio interface corresponding to the search frequency point until the search range is exceeded.

8. The cell searching method according to claim 7, wherein the step of detecting whether the synchronization signal of the base station exists in the data over radio interface comprises:
detecting whether the synchronization signal of the corresponding base station exists in turn based on a base station identifier in the data over radio interface.

9. A cell searching method for industrial network, applied to a base station, **characterized by** comprising the following steps:
acquiring whitelist information, wherein the whitelist information comprises terminal information associated with the base station; and
periodically sending broadcast information comprising the whitelist information, so that the terminal terminates cell searching and determines cell channel information as a cell searching result in response to that a terminal identifies that the terminal is successfully matched with the terminal information in the whitelist information during a cell searching process.

10. The cell searching method according to claim 9, wherein the step of periodically sending the broadcast information comprising the whitelist information comprises:
periodically sending main system information, wherein the main system information comprises cell channel information and indication and scheduling information of auxiliary system information; and
periodically sending the auxiliary system information, wherein the auxiliary system information comprises the whitelist information.

11. The cell searching method according to claim 9 or 10, wherein the terminal information comprises at least one of the following information: a physical address, a terminal code, or a logical address.

12. An industrial terminal, **characterized by** comprising: a memory, a processor, and a cell searching program stored on the memory and executable on the processor, wherein the cell searching program, when executed by the processor, implements the steps of the cell searching method according to any one of claims 1 to 8.

13. An industrial base station, **characterized by** comprising: a memory, a processor, and a cell searching program stored on the memory and executable on the processor, wherein the cell searching program, when executed by the processor, implements the steps of the cell searching method according to any one of claims 9 to 11.
